# EUROPEAN PATENT APPLICATION

(11) **EP 4 425 993 A1**
(43) Date of publication of application: **04.09.2024**
(21) Application number: 21961664.6
(22) Date of filing: 25.10.2021
(51) Int. Cl.: H04W 24/08

(54) **METHOD FOR TRANSMITTING CAPABILITY INDICATION INFORMATION, AND APPARATUS AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2021/126178
(87) International publication number: WO 2023/070279

(57) **Abstract**

A method for transmitting capability indication information, and an apparatus and a readable storage medium, which are applied to a wireless communication system. The method comprises: a user equipment (101) sending capability indication information to a network device (102), wherein the capability indication information is used for indicating whether the user equipment supports a contention measurement gap for an inter-RAT measurement. A user equipment sends capability indication information to a network device, so as to explicitly indicate whether the user equipment supports a contention measurement gap for an inter-RAT measurement, such that when the user equipment supports the contention measurement gap for the inter-RAT measurement, the network device sends contention measurement gap configuration information to the user equipment in a timely manner, thereby ensuring that the user equipment smoothly executes a contention measurement; and when the user equipment does not support the contention measurement gap for the inter-RAT measurement, the network device does not send the contention measurement gap configuration information to the user equipment, thereby saving on network resources.

## Description

### TECHNICAL FIELD

The present disclosure relates to the field of wireless communication technologies, and particularly to a method and an apparatus for transmitting capability indication information, and a readable storage medium.

### BACKGROUND

A network may configure two or more sets of contention (independent) measurement gaps for a measurement of a synchronization signal block (SSB), a measurement of a channel state information-reference signal (CSI-RS), a measurement of a position reference signal (PRS) or other measurements, respectively. The contention measurement gap may be used for different measurement objects and different measurement scenarios to reduce a measurement latency. The contention measurement gap may be referred to as an independent measurement gap.

Whether the contention (independent) measurement gap is available for an inter-radio access technology (inter-RAT) measurement depends on a terminal capability.

### SUMMARY

For this purpose, a method and an apparatus for transmitting capability indication information, and a readable storage medium are provided in the present disclosure.

According to a first aspect of embodiments of the present disclosure, there is provided a method for transmitting capability indication information. The method is performed by a user equipment. The capability indication information is transmitted to a network device. The capability indication information is configured to indicate whether the user equipment supports a contention measurement gap for an inter-RAT measurement.

In some possible implementations, the method further includes:
in response to transmitting capability indication information configured to indicate the user equipment supports the contention measurement gap for the inter-RAT measurement to the network device, receiving contention measurement gap configuration information from the network device, in which the contention measurement gap configuration information is configured to perform the inter-RAT measurement.

In some possible implementations, the inter-RAT measurement includes at least one of:
an E-UTRAN measurement, a UTRAN measurement, or a GSM measurement.

According to a second aspect of embodiments of the present disclosure, there is provided a method for transmitting capability indication information. The method is performed by a network device. The capability indication information is received from a user equipment. The capability indication information is configured to indicate whether the user equipment supports a contention measurement gap for an inter-radio access technology (inter-RAT) measurement.

In some possible implementations, the method further includes:
in response to receiving capability indication information configured to indicate the user equipment supports the contention measurement gap for the inter-RAT measurement from the user equipment, transmitting contention measurement gap configuration information to the user equipment, in which the contention measurement gap configuration information is configured to perform the inter-RAT measurement.

In some possible implementations, the method further includes:
in response to receiving capability indication information configured to indicate the user equipment does not support the contention measurement gap for the inter-RAT measurement from the user equipment, not transmitting contention measurement gap configuration information to the user equipment, in which the contention measurement gap configuration information is configured to perform the inter-RAT measurement.

According to a third aspect of embodiments of the present disclosure, there is provided a communication apparatus. The communication apparatus may be configured to perform steps executed by a user equipment in the above first aspect or any one possible design of the above first aspect. The user equipment may achieve functions of the above methods in the form of a hardware structure, a software module or a combination of a hardware structure and a software module.

When the communication apparatus according to the third aspect is implemented by the software module, the communication apparatus may include a transceiving module. The transceiving module is configured to support the communication apparatus to perform communication.

When steps of the above first aspect are executed, the transceiving module is configured to transmit capability indication information to a network device. The capability indication information is configured to indicate whether the user equipment supports a contention measurement gap for an inter-RAT measurement.

According to a fourth aspect of embodiments of the present disclosure, a communication apparatus is provided. The communication apparatus may be configured to perform steps executed by a network device in the above second aspect or any one possible design of the above second aspect. The network device may achieve functions of the above methods in the form of a hardware structure, a software module or a combination of a hardware structure and a software module.

When the communication apparatus according to the fourth aspect is implemented by the software module, the communication apparatus may include a processing module and a transceiving module coupled to each other. The processing module may be configured for the communication apparatus to perform processing operations, such as generating information/messages that need to be transmitted, or processing received signals to obtain information/messages. The transceiving module may be configured to support the communication apparatus to perform communication. The transceiving module is configured to support the communication apparatus to perform communication.

When steps of the above second aspect are executed, the transceiving module is configured to receive capability indication information from a user equipment. The capability indication information is configured to indicate whether the user equipment supports a contention measurement gap for an inter-RAT measurement.

According to a fifth aspect of embodiments of the present disclosure, there is provided a communication apparatus. The apparatus includes a processor and a memory. The memory is configured to store a computer program. The processor is configured to execute the computer program, to implement the above first aspect or any one possible design of the above first aspect.

According to a sixth aspect of embodiments of the present disclosure, there is provided a communication apparatus. The apparatus includes a processor and a memory. The memory is configured to store a computer program. The processor is configured to execute the computer program, to implement the above second aspect or any one possible design of the above second aspect.

According to a seventh aspect of embodiments of the present disclosure, there is provided a computer-readable storage medium storing instructions (or referred to as a computer program or a program). When the instructions are called and executed on a computer, the computer is caused to perform the first aspect or any one possible design of the first aspect.

According to an eighth aspect of embodiments of the present disclosure, there is provided a computer-readable storage medium storing instructions (or referred to as a computer program or a program). When the instructions are called and executed on a computer, the computer is caused to perform the second aspect or any one possible design of the second aspect.

It should be noted that, the details above and in the following are exemplary and illustrative, and do not constitute the limitation on the present disclosure.

### BRIEF DESCRIPTION OF THE DRAWINGS

Accompanying drawings described herein are provided for further understanding of embodiments of the present disclosure, and constitute a part of the description, and example embodiments and descriptions of the embodiments of the present disclosure are used to explain the embodiments of the present disclosure, and cannot constitute a limitation of the embodiments of the present disclosure. In the accompanying drawings:
the accompanying drawings herein are incorporated into the description and constitute a part of the description, show embodiments in conformity with embodiments of the present disclosure, and explain the principle of the present disclosure together with the description.
FIG. 1 is a diagram illustrating an architecture of a wireless communication system according to an embodiment of the present disclosure.
FIG. 2 is a flowchart illustrating a method for transmitting capability indication information according to an example embodiment.
FIG. 3 is a structural diagram illustrating an apparatus for transmitting capability indication information according to an example embodiment.
FIG. 4 is a structural diagram illustrating another apparatus for transmitting capability indication information according to an example embodiment.
FIG. 5 is a structural diagram illustrating another apparatus for transmitting capability indication information according to an example embodiment.
FIG. 6 is a structural diagram illustrating another apparatus for transmitting capability indication information according to an example embodiment.

### DETAILED DESCRIPTION

Embodiments of the present disclosure are further described below with reference to accompanying drawings and implementations.

The example embodiments will be described here, and examples thereof are shown in attached drawings. When the following descriptions refer to the accompanying drawings, same numbers in different drawings represent same or similar elements unless otherwise indicated. The implementations described in the following exemplary embodiments do not represent all possible implementations consistent with embodiments of the present disclosure. Rather, they are merely examples of apparatuses and methods consistent with some aspects of the present disclosure as detailed in the appended claims.

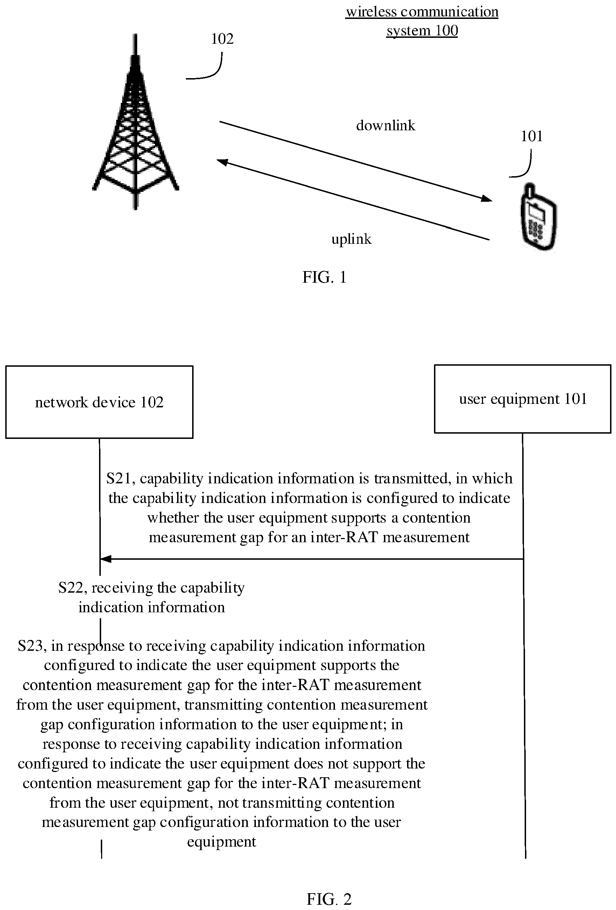

As illustrated in FIG. 1, a method for transmitting capability indication information according to an embodiment of the present disclosure is applicable to a wireless communication system 100. The wireless communication system 100 may include a user equipment 101 and a network device 102. The user equipment 101 is configured to support carrier aggregation. The user equipment 101 may be connected to a plurality of carrier units of the network device 102, including one primary carrier unit and one or more secondary carrier units.

It should be understood that the wireless communication system 100 is applicable to a low frequency scenario and a high frequency scenario. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system, or a future evolved public land mobile network (PLMN) system, etc.

The user equipment (UE) 101 may be a terminal, an access terminal, a terminal unit, a terminal station, a mobile station (MS), a remote station, a remote terminal, a mobile terminal, a wireless communication device, a terminal agent, a user equipment (UE), etc. The user equipment 101 may possess a wireless transceiving function capable of communicating (for example, wirelessly communicating) with one or more network devices of one or more communication systems and receiving network services provided by the network device. The network device includes, but is not limited to, the illustrated network device 102.

The user equipment 101 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle device, a wearable device, a user equipment in a future 5G network or a user equipment in a future evolved PLMN network, etc.

The network device 102 may be an access network device (or an access network station). The access network device refers to a device that provides a network access function, such as a radio access network (RAN) base station. The network device 102 may specifically include a base station (BS), or include a base station, a radio resource management device for controlling a base station, etc. The network device 102 may further include a relay station (a relay device), an access point, a base station in a future 5G network, a base station in a future evolved PLMN network, or an NR base station, etc. The network device 102 may be a wearable device or a vehicle-mounted device. The network device 102 may further be a communication chip with a communication module.

For example, the network device 102 includes, but is not limited to: a gnodeB (gNB) in 5G, an evolved node B (eNB) in an LTE system, a radio network controller (RNC), a node B (NB) in a WCDMA system, a radio controller in a CRAN system, a base station controller (BSC), a base transceiver station (BTS) in a GSM system or a CDMA system, a home base station (for example, a home evolved nodeB, or a home node B (HNB)), a baseband unit (BBU), a transmitting and receiving point (TRP), a transmitting point (TP) and a mobile switch center.

Since whether a contention measurement gap is available for an inter-radio access technology (inter-RAT) measurement depends on a terminal capability, it's unclear whether the contention measurement gap is applicable to the inter-RAT measurement in different scenarios.

A method for transmitting capability indication information is provided according to embodiments of the present disclosure. The method is applicable to a wireless communication system 100. As illustrated in FIG. 2, FIG. 2 is a flowchart illustrating a method for transmitting capability indication information according to an example embodiment. The method includes following steps.

At step S21, a user equipment 101 transmits the capability indication information to a network device 102. The capability indication information is configured to indicate whether the user equipment supports a contention measurement gap for an inter-RAT measurement.

At step S22, the network device 102 receives the capability indication information from the user equipment 101.

At step S23, in response to receiving capability indication information configured to indicate the user equipment 101 supports the contention measurement gap for the inter-RAT measurement from the user equipment 101, contention measurement gap configuration information is transmitted to the user equipment 101. The contention measurement gap configuration information is configured to perform the inter-RAT measurement. In a case that capability indication information configured to indicate the user equipment does not support the contention measurement gap for the inter-RAT measurement is received from the user equipment 101, the contention measurement gap configuration information is not transmitted to the user equipment. The contention measurement gap configuration information is configured to perform the inter-RAT measurement.

In this embodiment of the present disclosure, the user equipment 101 transmits the capability indication information to the network device 102, to explicitly indicate whether the user equipment 101 supports the contention measurement gap for the inter-RAT measurement, so that the network device 102 transmits the contention measurement gap configuration information to the user equipment 101 in a timely manner in a case that the user equipment 101 supports the contention measurement gap for the inter-RAT measurement, which ensures that the user equipment performs the contention measurement smoothly. In a case that the user equipment 101 does not support the contention measurement gap for the inter-RAT measurement, the contention measurement gap configuration information is not transmitted to the user equipment 101, which saves network resources.

A method for transmitting capability indication information is provided according to an embodiment of the present disclosure. The method is applicable to the user equipment 101. The method includes: transmitting the capability indication information to the network device 102. The capability indication information is configured to indicate whether the user equipment supports a contention measurement gap for an inter-RAT measurement.

In this embodiment of the present disclosure, the user equipment 101 transmits the capability indication information to the network device 102, to explicitly indicate whether the user equipment 101 supports the contention measurement gap for the inter-RAT measurement, so that the network device 102 transmits the contention measurement gap configuration information to the user equipment 101 in a timely manner in a case that the user equipment 101 supports the contention measurement gap for the inter-RAT measurement, which ensures that the user equipment performs the contention measurement smoothly. In a case that the user equipment 101 does not support the contention measurement gap for the inter-RAT measurement, the contention measurement gap configuration information is not transmitted to the user equipment 101, which saves network resources.

A method for transmitting capability indication information is provided according to an embodiment of the present disclosure. The method is applicable to the user equipment 101. The method includes: transmitting capability indication information to the network device 102. The capability indication information is configured to indicate whether the user equipment supports a contention measurement gap for an inter-RAT measurement. In response to transmitting the capability indication information configured to indicate the user equipment supports the contention measurement gap for the inter-RAT measurement to the network device, contention measurement gap configuration information is received from the network device. The contention measurement gap configuration information is configured to perform the inter-RAT measurement.

In some possible implementations, the inter-RAT measurement includes at least one of:
an evolved UMTS terrestrial radio access network (E-UTRAN) measurement,
a UMTS terrestrial radio access network (UTRAN) measurement, or
a global system for mobile communication (GSM) measurement.

In this embodiment of the present disclosure, the user equipment 101 transmits the capability indication information to the network device 102, to explicitly indicate whether the user equipment 101 supports the contention measurement gap for the inter-RAT measurement, so that the network device 102 transmits the contention measurement gap configuration information to the user equipment 101 in a timely manner in a case that the user equipment 101 supports the contention measurement gap for the inter-RAT measurement, which ensures that the user equipment performs the contention measurement smoothly.

A method for transmitting capability indication information is provided according to an embodiment of the present disclosure. The method is applicable to the network device 102. The method includes: receiving the capability indication information from the user equipment 101. The capability indication information is configured to indicate whether the user equipment supports a contention measurement gap for an inter-RAT measurement.

In this embodiment of the present disclosure, the user equipment 101 transmits the capability indication information to the network device 102, to explicitly indicate whether the user equipment 101 supports the contention measurement gap for the inter-RAT measurement, so that the network device 102 transmits the contention measurement gap configuration information to the user equipment 101 in a timely manner in a case that the user equipment 101 supports the contention measurement gap for the inter-RAT measurement, which ensures that the user equipment performs the contention measurement smoothly. In a case that the user equipment 101 does not support the contention measurement gap for the inter-RAT measurement, the contention measurement gap configuration information is not transmitted to the user equipment 101, which saves network resources.

A method for transmitting capability indication information is provided according to an embodiment of the present disclosure. The method is applicable to the network device 102. The method includes: receiving the capability indication information from the user equipment 101. The capability indication information is configured to indicate whether the user equipment supports a contention measurement gap for an inter-RAT measurement. In response to receiving the capability indication information configured to indicate the user equipment supports the contention measurement gap for the inter-RAT measurement from the user equipment, contention measurement gap configuration information is transmitted to the user equipment. The contention measurement gap configuration information is configured to perform the inter-RAT measurement.

In some possible implementations, the inter-RAT measurement includes at least one of: an E-UTRAN measurement, a UTRAN measurement, or a GSM measurement.

A method for transmitting capability indication information is provided according to an embodiment of the present disclosure. The method is applicable to the network device 102. The method includes: receiving the capability indication information from the user equipment 101. The capability indication information is configured to indicate whether the user equipment supports a contention measurement gap for an inter-RAT measurement. In a case that capability indication information configured to indicate the user equipment does not support the contention measurement gap for the inter-RAT measurement is received from the user equipment 101, contention measurement gap configuration information is not transmitted to the user equipment 101. The contention measurement gap configuration information is configured to perform the inter-RAT measurement.

In some possible implementations, the inter-RAT measurement includes at least one of: an E-UTRAN measurement, a UTRAN measurement, or a GSM measurement.

Based on the same conception with the above method embodiments, a communication apparatus is further provided in embodiments of the present disclosure. The communication apparatus may possess functions of the user equipment 101 in the above embodiments, and may be configured to perform steps executed by the user equipment 101 provided in the above embodiments. The functions may be implemented by hardware, or by software or hardware to execute a corresponding software. The software or the hardware includes one or more modules corresponding to the above functions.

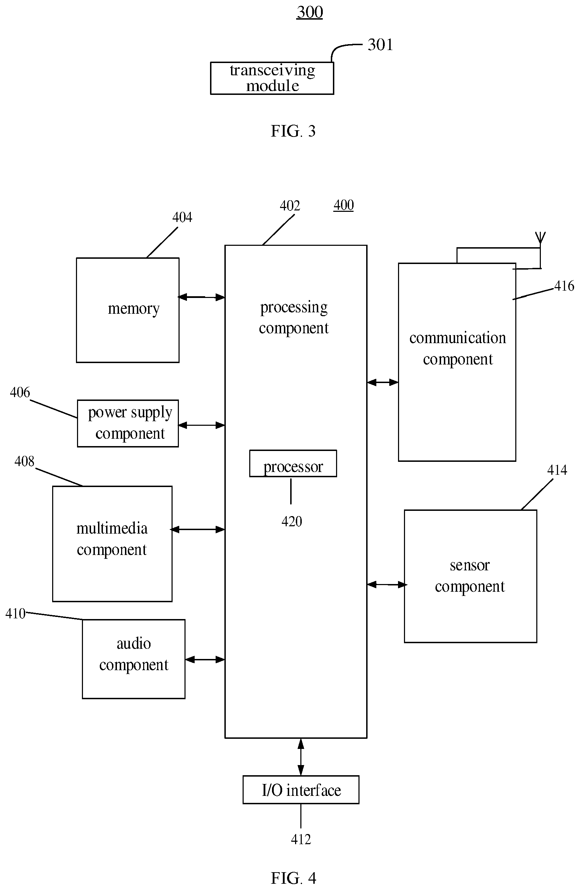

In a possible implementation, a communication apparatus 300 as illustrated in FIG. 3 may be taken as the user equipment 101 involved in the above method embodiments, and perform steps executed by the user equipment 101 in the above method embodiments. As illustrated in FIG. 3, the communication apparatus 300 may include a transceiving module 301. The transceiving module 301 may be configured to support the communication apparatus 300 to perform communication. The transceiving module 301 may possess a wireless communication function that, for example, may perform wireless communication with other communication apparatus via a radio air interface.

When steps implemented by the user equipment 101 are executed, the transceiving module 301 transmits capability indication information to a network device. The capability indication information is configured to indicate whether the user equipment supports a contention measurement gap for an inter-RAT measurement.

In some possible implementations, the transceiving module 301 is further configured to, after transmitting capability indication information configured to indicate the user equipment supports the contention measurement gap for the inter-RAT measurement to the network device, receive contention measurement gap configuration information from the network device. The contention measurement gap configuration information is configured to perform the inter-RAT measurement.

In some possible implementations, the inter-RAT measurement includes at least one of:
an E-UTRAN measurement, a UTRAN measurement or a GSM measurement.

When the communication module is the user equipment 101, a structure of a communication apparatus may be as illustrated in FIG. 4. An apparatus 400 may be a mobile phone, a computer, a digital broadcasting terminal, a messaging device, a game console, a tablet device, a medical equipment, a fitness equipment, a personal digital assistant, etc.

As illustrated FIG. 4, the apparatus 400 may include one or more of a processing component 402, a memory 404, a power supply component 406, a multimedia component 408, an audio component 410, an input/output (I/O) interface 412, a sensor component 414 or a communication component 416.

The processing component 402 generally controls the whole operation of the apparatus 400, such as the operations related to display, phone call, data communication, camera operation and recording operation. The processing component 402 may include one or more processors 420 to perform instructions, to complete all or part of steps of the above method. In addition, the processing component 402 may include one or more modules for the convenience of interaction between the processing component 402 and other components. For example, the processing component 402 may include a multimedia module for the convenience of interaction between the multimedia component 408 and the processing component 402.

The memory 404 is configured to store all types of data to support the operation of the apparatus 400. Examples of the data include the instructions of any applications or methods operated on the apparatus 400, contact data, phone book data, messages, pictures, videos, etc. The memory 404 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 406 may provide power supply for all components of the apparatus 400. The power supply component 406 may include a power supply management system, one or more power supplies, and other units related to generating, managing and distributing power for the apparatus 400.

The multimedia component 408 includes an output interface screen provided between the apparatus 400 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 408 includes a front camera and/or a rear camera. When the apparatus 400 is in operation mode, such as shooting mode or video mode, the front camera and/or the rear camera may receive external multimedia data. Every front camera and rear camera may be a fixed optical lens system or an optical lens system with focal length and optical zoom capacity.

The audio component 410 is configured as an output and/or input signal. For example, the audio component 410 includes a microphone (MIC). When the apparatus 400 is in operation mode, such as call mode, record mode, and speech recognition mode, the microphone is configured to receive the external audio signals. The audio signals received may be further stored in the memory 404 or sent via the communication component 416. In some embodiments, the audio component 410 further includes a speaker configured to output an audio signal.

The I/O interface 412 provides an interface for the processing component 402 and the peripheral interface module, and the peripheral interface module may be a keyboard, a click wheel, a button, etc. The buttons may include but not limited to a home button, a volume button, a start button and a lock button.

The sensor component 414 includes one or more sensors, configured to provide various aspects of status assessment for the apparatus 400. For example, the sensor component 414 may detect the on/off state of the apparatus 400 and the relative positioning of the component. For example, the component is a display and a keypad of the apparatus 400. The sensor component 414 may further detect the location change of the apparatus 400 or one component of the apparatus 400, the presence or absence of contact between the user and the apparatus 400, the orientation or acceleration/deceleration of the apparatus 400, and the temperature change of the apparatus 400. The sensor component 414 may include a proximity sensor, which is configured to detect presence of the objects nearby without any physical contact. The sensor component 414 may further include a light sensor such as a CMOS or CCD image sensor, which is configured to use in imaging applications. In some embodiments, the sensor component 414 may further include an acceleration transducer, a gyroscope sensor, a magnetic sensor, a pressure sensor or a temperature sensor.

The communication component 416 is configured for the convenience of wire or wireless communication between the apparatus 400 and other devices. The apparatus 400 may access wireless networks based on a communication standard, such as WiFi, 4G or 5G, or their combination. In an example embodiment, the communication component 416 receives broadcast signals or broadcast-related information from an external broadcast management system via a broadcast channel. In an example embodiment, the communication component 416 further includes a near field communication (NFC) module to facilitate short-range communication. For example, the NFC module may be implemented based on a radio frequency identification (RFID) technology, an infrared data association (IRDA) technology, an ultra-wideband (UWB) technology, a bluetooth (BT) technology and other technologies.

In an example embodiment, the apparatus 400 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

Based on the same conception, a communication apparatus is further provided according to embodiments of the present disclosure. The communication apparatus may possess functions of the network device 102 in the above method embodiments, and may be configured to execute steps executed by the network device 102 according to the above method embodiments. The functions may be implemented by hardware, or by software or hardware to execute a corresponding software. The software or the hardware includes one or more modules corresponding to the above functions.

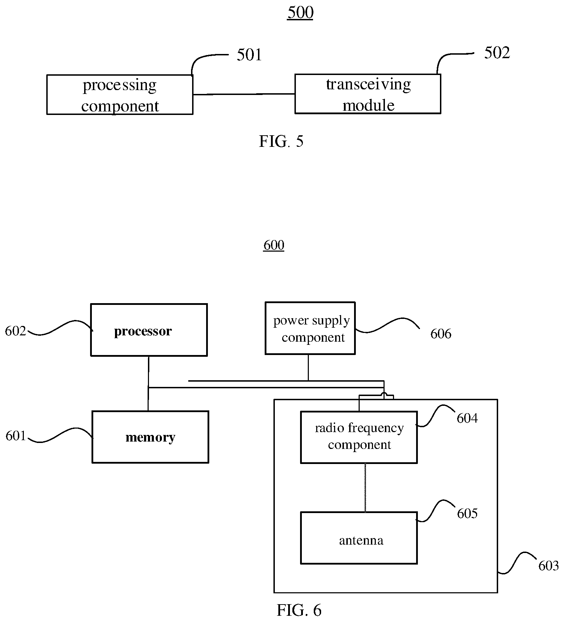

In a possible implementation, a communication apparatus 500 as illustrated in FIG. 5 may be taken as a network device 102 involved in the above method embodiments, and execute steps executed by the network device 102 according to the above method embodiments. As illustrated in FIG. 5, the communication apparatus 500 may include a processing module 501 and a transceiving module 502 coupled to each other. The processing module 501 may be configured for the communication apparatus to perform processing operations, such as generating information/messages that need to be transmitted, or processing received signals to obtain information/messages. The transceiving module may be configured to support the communication apparatus to perform communication. The transceiving module 502 may be configured to support the communication apparatus to perform communication. The transceiving module 502 may possess a wireless communication function, for example, may perform wireless communication with other communication apparatus via a radio air interface.

When steps implemented by the network device 102 are executed, the transceiving module 502 is configured to receive capability indication information from the user equipment. The capability indication information is configured to indicate whether the user equipment supports a contention measurement gap for an inter-RAT measurement.

In some possible implementations, the transceiving module 502 is further configured to, after receiving capability indication information configured to indicate the user equipment supports the contention measurement gap for the inter-RAT measurement from the user equipment, transmit contention measurement gap configuration information to the user equipment. The contention measurement gap configuration information is configured to perform the inter-RAT measurement.

In some possible implementations, the transceiving module 502 is further configured to, after receiving capability indication information configured to indicate the user equipment supports the contention measurement gap for the inter-RAT measurement from the user equipment, not transmit contention measurement gap configuration information to the user equipment. The contention measurement gap configuration information is configured to perform the inter-RAT measurement.

In some possible implementations, the inter-RAT measurement includes at least one of: an E-UTRAN measurement, a UTRAN measurement or a GSM measurement.

In a case that the communication apparatus is a network device, a structure of the communication apparatus may be as illustrated in FIG. 6. The structure of the communication apparatus is illustrated by taking the network device 102 being a base station for example. As illustrated in FIG. 6, the apparatus 600 includes a memory 601, a processor 602, a transceiving component 603 and a power supply component 606. The memory 601 is coupled to the processor 602, and may be configured to store a program and data necessary for achieving functions of the communication apparatus 600. The processor 602 is configured to support the communication apparatus 600 to execute corresponding functions in the above method, and the above functions may be achieved by calling a program stored in the memory 601. The transceiving component 603 may be a wireless transceiver, and may be configured to support the communication apparatus 600 to receive a signaling and/or data via a wireless air interface, and transmit the signaling and/or the data. The transceiving component 603 may be referred to as a transceiving unit or a communication unit. The transceiving component 603 may include a radio frequency component 604 and one or more antennas 605. The radio frequency component 604 may be a remote radio unit (RRU), and may be specifically configured for transmission of an radio frequency signal and conversion between the radio frequency signal and a baseband signal. The one or more antennas 605 may be specifically configured for radiating and receiving the RF signal.

When the communication apparatus 600 needs to transmit data, the processor 602 may output a baseband signal to an radio frequency unit after performing a baseband processing on data to be transmitted, and the radio frequency unit may transmit a radio frequency signal in the form of electromagnetic waves via an antenna after performing a radio frequency processing on the baseband signal. When data is transmitted to the communication apparatus 600, the radio frequency unit converts the radio frequency signal into a baseband signal after receiving the radio frequency signal via the antenna, and outputs the baseband signal to the processor 602, and the processor 602 converts the baseband signal to data and processes the data.

After considering the specification and practicing the present disclosure here, those skilled in the art will easily think of other implementations of the embodiments of the present disclosure. The present application is intended to cover any variations, usages, or adaptive changes of the embodiments of the present disclosure. These variations, usages or adaptive changes of the embodiments of the present disclosure follow the general principles of the present disclosure and include common knowledge or conventional technical means in the technical field not disclosed by the present disclosure. The description and the embodiments are to be regarded as exemplary only, and the true scope and spirit of the embodiments of the present disclosure are given by the appended claims.

It should be understood that the embodiments of the present disclosure are not limited to the precise structure described above and shown in the drawings, and various modifications and changes may be made without departing from its scope. The scope of the embodiments of the present disclosure is only limited by the appended claims.

### Industrial Applicability

A user equipment transmits capability indication information to a network device, to explicitly indicate whether the user equipment supports a contention measurement gap for an inter-RAT measurement, so that the network device transmits contention measurement gap configuration information to the user equipment in a timely manner in a case that the user equipment supports the contention measurement gap for the inter-RAT measurement, which ensures that the user equipment performs a contention measurement smoothly. In a case that the user equipment does not support the contention measurement gap for the inter-RAT measurement, the contention measurement gap configuration information is not transmitted to the user equipment, which saves network resources.

## Claims

1. A method for transmitting capability indication information, applied to a user equipment, comprising:
transmitting the capability indication information to a network device, wherein the capability indication information is configured to indicate whether the user equipment supports a contention measurement gap for an inter-radio access technology (inter-RAT) measurement.

2. The method according to claim 1, further comprising:
in response to transmitting capability indication information configured to indicate the user equipment supports the contention measurement gap for the inter-RAT measurement to the network device, receiving contention measurement gap configuration information from the network device, wherein the contention measurement gap configuration information is configured to perform the inter-RAT measurement.

3. The method according to claim 1, wherein
the inter-RAT measurement comprises at least one of:
an E-UTRAN measurement, a UTRAN measurement, or a GSM measurement.

4. A method for receiving capability indication information, applied to a network device, comprising:
receiving the capability indication information from a user equipment, wherein the capability indication information is configured to indicate whether the user equipment supports a contention measurement gap for an inter-radio access technology (inter-RAT) measurement.

5. The method according to claim 4, further comprising:
in response to receiving capability indication information configured to indicate the user equipment supports the contention measurement gap for the inter-RAT measurement from the user equipment, transmitting contention measurement gap configuration information to the user equipment, wherein the contention measurement gap configuration information is configured to perform the inter-RAT measurement.

6. The method according to claim 4, further comprising:
in response to receiving capability indication information configured to indicate the user equipment does not support the contention measurement gap for the inter-RAT measurement from the user equipment, not transmitting contention measurement gap configuration information to the user equipment, wherein the contention measurement gap configuration information is configured to perform the inter-RAT measurement.

7. A communication apparatus, comprising:
a transceiving module, configured to transmit capability indication information to a network device, wherein the capability indication information is configured to indicate whether a user equipment supports a contention measurement gap for an inter-radio access technology (inter-RAT) measurement.

8. A communication apparatus, comprising:
a transceiving module, configured to receive capability indication information from a user equipment, wherein the capability indication information is configured to indicate whether the user equipment supports a contention measurement gap for an inter-radio access technology (inter-RAT) measurement.

9. A communication apparatus, comprising a processor and a memory,
wherein the memory is configured to store a computer program; and
the processor is configured to execute the computer program, to implement the method according to any one of claims 1 to 3.

10. A communication apparatus, comprising a processor and a memory,
wherein the memory is configured to store a computer program; and
the processor is configured to execute the computer program, to implement the method according to any one of claims 4 to 6.

11. A computer-readable storage medium storing instructions, wherein when the instructions are called and executed on a computer, the computer is caused to perform the method according to any one of claims 1 to 3.

12. A computer-readable storage medium storing instructions, wherein when the instructions are called and executed on a computer, the computer is caused to perform the method according to any one of claims 4 to 6.
